(19)

**Europäisches Patentamt**
**European Patent Office**
**Office européen des brevets**

(11) **EP 4 718 762 A1**

(12) **EUROPEAN PATENT APPLICATION**

(43) Date of publication:
**01.04.2026 Bulletin 2026/14**

(21) Application number: **26156795.2**

(22) Date of filing: **26.09.2023**

(51) International Patent Classification (IPC):
**H04L 1/1822** (2023.01)   **H04L 1/1829** (2023.01)
**H04L 1/1867** (2023.01)

(52) Cooperative Patent Classification (CPC):
**H04L 1/1887; H04L 1/1822; H04L 1/1864;**
**H04L 1/1893; H04L 1/1896**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **28.09.2022 US 202263410916 P**
**13.07.2023 US 202363526579 P**

(62) Document number(s) of the earlier application(s) in
accordance with Art. 76 EPC:
**23798590.8 / 4 540 948**

(71) Applicant: **InterDigital Patent Holdings, Inc.**
**Wilmington, DE 19809 (US)**

(72) Inventors:
 • **NEGUSSE, Senay**
 **Montreal, H3A 3G4 (CA)**
 • **RAO, Jaya**
 **Montreal, H3A 3G4 (CA)**

 • **LUTCHOOMUN, Tejaswinee**
 **Montreal, H3A 3G4 (CA)**
 • **KINI, Ananth**
 **Conshohocken, 19428 (US)**
 • **MOSTAFA, Ahmed**
 **Ottawa, K1S 5E5 (CA)**
 • **EL HAMSS, Aata**
 **Quebec, H2K 1G1 (CA)**

(74) Representative: **AWA Sweden AB**
**Box 5117**
**200 71 Malmö (SE)**

Remarks:
This application was filed on 06-02-2026 as a
divisional application to the application mentioned
under INID code 62.

(54) **SUPPORTING CODE BLOCK GROUP (CBG) BASED TRANSMISSIONS**

(57)   A wireless transmit/receive unit (WTRU) may receive configuration information. The WTRU may transmit a plurality of codeblock groups (CBGs) corresponding to one or more protocol data units (PDUs) of a first PDU set. The WTRU may receive feedback indicating that at least one of the plurality of CBGs of the first PDU set was not successfully received. The WTRU may determine that dynamic PUSCH resource grants are later in time than a second PUSCH transmission occasion. The WTRU may determine whether to retransmit the at least one of the plurality of CBGs of the first PDU set using the dynamic PUSCH resource grants or using the second PUSCH transmission occasion. The determination may be based on an amount of time remaining in a delay budget for the first PDU set. The WTRU may retransmit the at least one of the plurality of CBGs of the first PDU set.

EP 4 718 762 A1

**Description**

**CROSS-REFERENCE TO RELATED APPLICATIONS**

This application claims the benefit of United States Provisional Application No. 63/410,916, filed on September 28, 2022, and United States Provisional Application No. 63/526,579, filed on July 13, 2023, the entire contents of each of which are incorporated herein by reference.

**BACKGROUND**

Code Block Group (CBG) based transmissions are beneficial for traffic with large transport block size since, in the event of erroneous reception, only a fraction (CBG) of the total transport block needs to be retransmitted. Extended Reality (XR) traffic is an example of traffic characterized by large payload sizes and, at times, bursty packet (consequently large Transport Block (TB)) in addition to frequent rate of arrival as well as quasi-periodic. As a result, XR services and other traffic may demand high capacity together with strict low latency requirement.

**SUMMARY**

Wireless communications between one or more user equipment (UE) and a network are considered herein. A UE also may be referred to as a wireless transmit/receive unit (WTRU). The terms UE and WTRU are used interchangeably herein.

A WTRU may receive configuration information. The configuration information may include, for example, a delay budget value, and/or an indication of a configured resource grants for one or more physical uplink shared channel (PUSCH resources). The WTRU may transmit a plurality of codeblock groups (CBGs) corresponding to one or more protocol data units (PDUs) of a first PDU set using a first PUSCH transmission occasion corresponding to the configured resource grants. If at least one of the plurality of CBGs corresponding to the one or more PDUs of the first PDU set was not successfully received, the WTRU may receive feedback. For example, the feedback may indicate dynamic PUSCH resource grants for retransmission of the at least one of the plurality of CBGs. The at least one of the plurality of CBGs corresponding to the one or more PDUs of the first PDU set to be retransmitted may be negatively acknowledged (NACK-ed). In one example, the feedback may be received in downlink control information (DCI). The WTRU may determine whether the dynamic PUSCH resource grants are later in time than a second PUSCH transmission occasion. If the dynamic PUSCH resource grants are not later in time (e.g., earlier in time) than a second PUSCH transmission occasion, the WTRU may retransmit the at least one CBG corresponding to one or more PDUs of the first PDU set via the dynamic PUSCH resource grants. If the dynamic PUSCH resource grants are later in time than a second PUSCH transmission occasion, the WTRU may determine whether to retransmit the at least one of the plurality of CBGs corresponding to the one or more PDUs of the first PDU set using the dynamic PUSCH resource grants or using the second PUSCH transmission occasion corresponding to the configured resource grants. For example, the determination may be based on the amount of time remaining in a delay budget for the first PDU set and a threshold.

For one example, if the remaining delay budget is less than the threshold, the at least one CBG may be retransmitted using the second PUSCH transmission occasion corresponding to the configured resource grants. One or more CBGs corresponding to one or more PDUs of a second PDU set may be transmitted in the second PUSCH transmission occasion corresponding to the configured resource grants. For example, if every CBG corresponding to the one or more PDUs of the second PDU set is transmitted in the second PUSCH transmission occasion corresponding to the configured resource grants, the WTRU may send an indication for cancelling the dynamic PUSCH resource grants.

For another example, if the remaining delay budget is greater than the threshold, the at least one CBG may be retransmitted using the second PUSCH transmission occasion corresponding to the configured resource grants. At least one CBG corresponding to one or more PDUs of the second set may be transmitted in the dynamic PUSCH resource grants allocated for retransmission of the at least one CBG corresponding to one or more PDUs of the first PDU set.

The WTRU may further send an indication that the second PUSCH transmission occasion corresponding to the configured resource grants includes a retransmission of the at least one CBG corresponding to one or more PDUs of the first PDU set. The indication may be a hybrid automatic repeat request (HARQ) process ID. For example, the configuration information may also include threshold values related to one or more HARQ transmissions. The WTRU may retransmit the at least one CBG corresponding to one or more PDUs of the first PDU set.

**BRIEF DESCRIPTION OF THE DRAWINGS**

A more detailed understanding may be had from the detailed description below, given by way of example in conjunction with drawings appended hereto. Figures in such drawings, like the detailed description, are examples. As such, the Figures and the detailed description are not to be considered limiting, and other equally effective examples are possible and likely.

FIG. 1A is an example system diagram illustrating an example communications system in which one or more disclosed embodiments may be implemented.

FIG. 1B is an example system diagram illustrating an example wireless transmit/receive unit (WTRU) that may be used within the communications system illustrated in FIG. 1A according to an embodiment.

FIG. 1C is an example system diagram illustrating an example radio access network (RAN) and an example core network (CN) that may be used within the communications system illustrated in FIG. 1A according to an embodiment.

FIG. 1D is an example system diagram illustrating a further example RAN and a further example CN that may be used within the communications system illustrated in FIG. 1A according to an embodiment.

FIGs. 2A-2C illustrate three example retransmissions of at least one codeblock group (CBG) corresponding to a first packet data unit (PDU) set after the at least one CBG was not successfully transmitted during the first physical uplink shared channel (PUSCH) transmission occasion.

FIG. 3 is a flow chart illustrating a method performed by a wireless transmit/receive unit (WTRU) to retransmit at least one CBG corresponding to the first PDU set after the at least one CBG corresponding to the first PDU set was not successfully transmitted during the first PUSCH transmission occasion.

## EXAMPLE NETWORKS FOR IMPLEMENTATION OF THE INVENTION

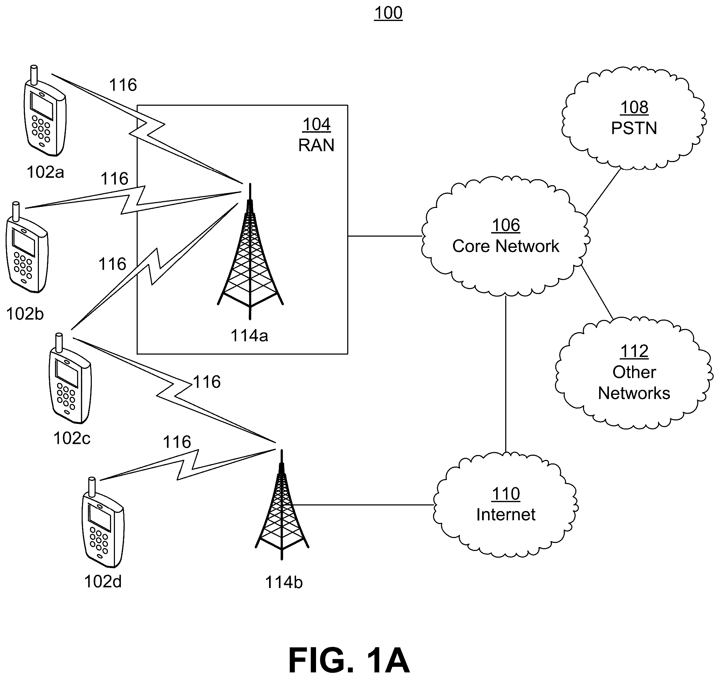

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

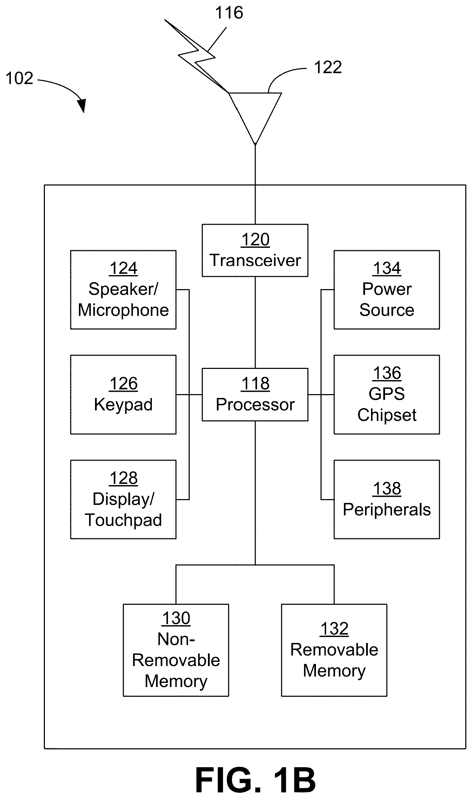

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (*e.g.,* associated with particular subframes for both the UL (*e.g.,* for transmission) and downlink (*e.g.,* for reception) may be concurrent and/or simultaneous. The full duplex radio may include an interference management unit 139 to reduce and or substantially eliminate self-interference via either hardware (*e.g.,* a choke) or signal processing via a processor (*e.g.,* a separate processor (not shown) or via processor 118). In an embodiment, the WRTU 102 may include a half-duplex radio for which transmission and reception of some or all of the signals (*e.g.,* associated with particular subframes for either the UL (*e.g.,* for transmission) or the downlink (*e.g.,* for reception)).

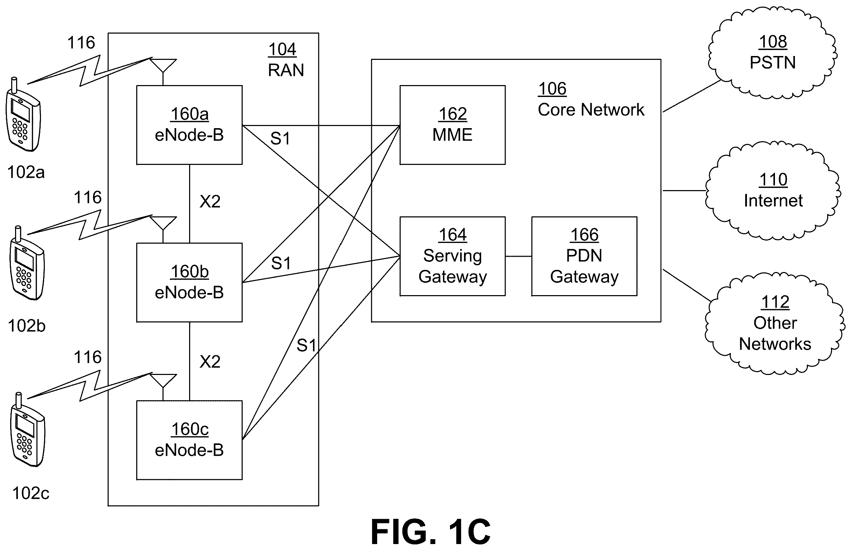

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (*e.g.,* temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (*e.g.,* directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (*e.g.,* all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (*e.g.,* 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (*e.g.,* every STA), including the AP, may sense the primary channel. If the primary channel is sensed/detected and/or determined to be busy by a particular STA, the particular STA may back off. One STA (*e.g.,* only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (*e.g.,* only support for) certain and/or limited bandwidths. The MTC devices may include a battery with a battery life above a threshold (*e.g.,* to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (*e.g.,* MTC type devices) that support (*e.g.,* only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

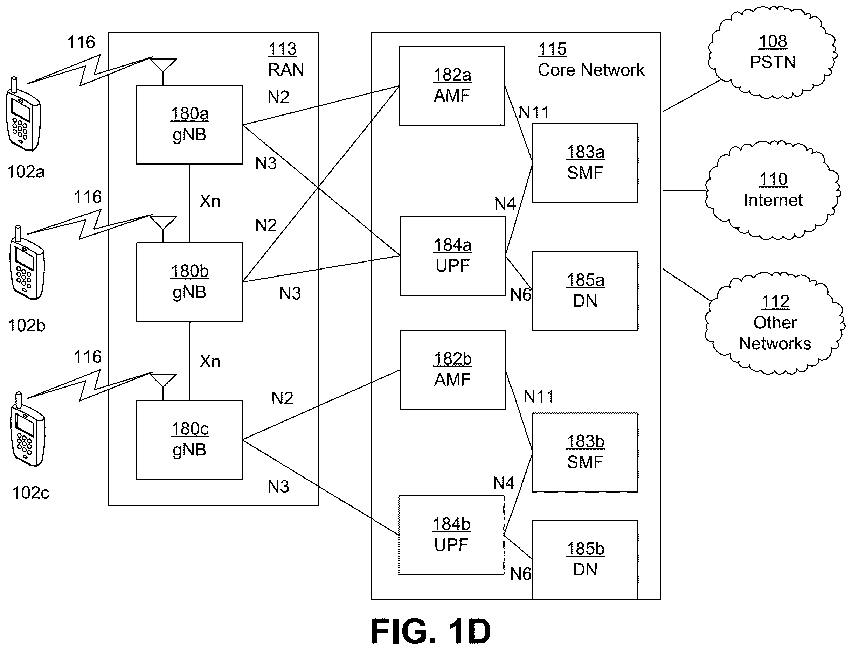

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 180b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (*e.g.,* containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (*e.g.,* such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (*e.g.,* handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (*e.g.,* an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figs. 1A-1D, and the corresponding description of Figs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (*e.g.,* which may include one or more antennas) may be used by the emulation devices to transmit and/or receive data.

The description provided herein is for exemplary purposes and does not intend to limit in any way the applicability of the methods described further herein to other wireless technologies and/or to wireless technology using different principles, when applicable.

The term extended reality (XR) may be an umbrella term for different types of immersive experiences, including virtual reality (VR), augmented reality (AR), mixed reality (MR), and/or the realities interpolated among them. VR may be a rendered version of a delivered visual and audio scene. The rendering may be designed to mimic the visual (*e.g.,* stereoscopic 3D) and/or audio sensory stimuli of the real world as naturally as possible to an observer or user as they move within the limits defined by the application. AR may include a user being provided with additional information or artificially generated objects, and/or content overlaid upon their current environment. MR may be an advanced form of AR where some virtual elements are inserted into the physical scene with the intent to provide the illusion that these elements are part of the real scene. XR may include real-and-virtual combined environments and human-machine interactions generated by computer technology and/or wearables.

The notion of immersion in the context of XR services may refer to the sense of being surrounded by the virtual environment as well as providing the feeling of being physically and spatially located in the virtual environment. The levels of virtuality may range from partial sensory inputs to fully immersive multisensory inputs leading to a virtual reality practically indiscernible from actual reality.

XR devices may be associated with capabilities that offer various degrees of spatial tracking. XR devices may be equipped with various sensors to enable spatial tracking, for example, monocular/stereo/depth cameras, radio beacons, GPS, inertial sensors, and/or the like. Such spatial tracking may be performed at different levels, such as 3 Degrees of Freedom - DoF (*e.g.,* rotational motion along X, Y and Z axis), 6 DoF (*e.g.,* rotational and/or translational motion along X, Y and Z axis). Such spatial tracking may result in an interaction to experience some form of virtual content. The user may act in and/or interact with the components within extended reality. For example, the actions and/or interactions may involve movements, gestures, eye tracking, etc. Spatial tracking may be an enabler for immersive XR experience. For example, some form of head and/or motion tracking may ensure that the simulated visual and/or audio components from the user perspective may be updated to be consistent with a user's movements. Imprecise and/or delayed spatial tracking may lead to sensation of discomfort and/or motion sickness for the user.

Described herein is a network that may refer to one or more base stations (*e.g.,* gNBs) which in turn may be associated with one or more transmission/reception points (TRPs) or any other node in the radio access network.

A WTRU may correspond to any XR device/node which comes in a variety of form factors. A WTRU (*e.g.,* XR WTRU) may include varied forms, such as, head mounted displays (HMD), optical see-through glasses and camera see-through HMDs for AR and MR, mobile devices with positional tracking and camera, wearables, and/or the like. In addition to the above, several different types of XR WTRU may be envisioned based on XR device functions for example, as display, camera, sensors, sensor processing, wireless connectivity, XR/Media processing, power supply, and/or the like to be provided by one or more devices, wearables, actuators, controllers and/or accessories. One or more device/nodes/WTRUs may be grouped into a collaborative XR group for supporting any of XR applications/services.

Throughout the embodiments described herein, the network may include any of a base station (*e.g.,* gNB, TRP, RAN node, access node), core network function (*e.g.,* AMF) and application function (*e.g.,* edge server function, remote server function), for example.

Throughout the embodiments herein, flows may correspond to one or more of QoS flows and/or data flows. For example, flow of data may consist of one or more PDUs or PDU sets. The one or more PDUs or PDU sets may be associated with one or more QoS requirements. The one or more QoS requirements may include latency, data rate, reliability, and/or RTT latency. Different flows, possibly originating from a common application/experience source and/or intended to a common destination device/WTRU or group of associated devices/WTRU may be referred to associated flows or correlated flows.

Throughout the embodiments herein, forwarding configuration may correspond to one or more of the following: radio bearers (*e.g.,* data radio bearers (DRBs) and/or signaling radio bearers (SRBs), logical channels (LCHs), logical channel groups (LCGs), configuration parameters in the individual layers within the AS protocol stack (*e.g.,* SDAP, PDCP, RLC, MAC, PHY, other protocol layers), parameters associated with logical channel prioritization (LCP) (*e.g.,* priority, PBR, BSD), BWPs, carriers, radio links/interfaces (Uu links, SLs), and/or radio resources. For example, radio resources may include a set of one or more frequency/time/spatial resources such as timeslots, subcarriers, or beams. Radio resources may also be associated with configured grants (CG), dynamic grants (DG) and/or any other resource grants or grant free resources.

Throughout the embodiments herein, mapping configuration may correspond to one or more parameters and/or configurations associated with mapping from one or more application data (*e.g.,* PDU SET) flows, QoS flows (*e.g.,* associated or non-associated), to one or more radio bearers, SDAP, PDCP, LCHs, carriers or component carriers (*e.g.,* CCs in CA configurations), BWPs, and radio links/interfaces (*e.g.,* Uu link or sidelinks), which may be used for delivering the PDUs in UL direction or DL direction, for example.

Throughout the embodiments herein, XR/application-aware data transmissions/receptions or XR/application-aware QoS handling, may correspond to one or more of the following, for example, PDU set or PDU set handling, application/high layer importance/priority, and/or QoS handling. A PDU set (*e.g.,* media unit, video frame, etc.) may comprise of one or more PDUs. A PDU set may be associated with PDU set-level QoS requirements (*e.g.,* data rate, latency, error rate, reliability), which may be applicable for one or more PDUs (*e.g.,* all PDUs) associated with a PDU set. The different PDUs in a PDU set may be associated with individual PDU-level QoS requirements. Such associations and inter-dependencies may be visible to the AS-layers (*e.g.,* with associated IDs) and/or handled at the AS layers with the awareness of the association during data transmission in UL and reception in DL. The different PDUs in a PDU set or each PDU in a PDU set may be associated with different application/high layer importance/priority values. Such associations and inter-dependencies may be visible to the AS-layers (*e.g.,* with associated IDs) and/or handled at the AS layers with the awareness of the association during data transmission in UL and reception in DL.

The different PDUs in a PDU set or one or more PDUs (*e.g.,* all PDUs) in a PDU set may be associated with different application/high layer importance/priority values. Such importance value may correspond to spatial importance (*e.g.,* spatial position of the video frame whose data is carried by the PDU/PDU set, where PDUs/PDU set carrying field of view (FoV) spatial positions may be associated with higher spatial importance than non-FoV spatial positions) or temporal importance (*e.g.,* time sequence of the video frame whose data is carried by the PDU/PDU set, where PDUs/PDU sets carrying base video frames such as I-frame may be associated with higher temporal importance than differential video frames such as P-frame/B-frame). Such importance values may be visible to the AS layers (*e.g.,* with associated IDs/markers/indications), possibly enabled by application awareness, during data transmission and reception.

The PDUs/PDU sets of an application may be encoded and delivered by the application to WTRU (in UL) or network (in DL) via one or more QoS/data flows. In this regard, the different QoS flows carrying the PDUs/PDU sets associated to an XR application/experience may be visible to the AS-layers (*e.g.,* with associated IDs) and/or handled at the AS layers with the awareness of the association during data transmission and reception.

Throughout the embodiments herein, one or more of the characterizations and references to PDU sets may correspond to one or more of the following characterizations. For example, a PDU set (*e.g.,* application data unit or video frame) may include multiple PDUs. The PDUs within the same PDU set may have the same or different payload sizes and/or priorities (e.g., importance). The PDUs, within a PDU set, may have dependency among each other. PDUs in a PDU set may have a joint QoS requirement (*e.g.,* PDU set delay bound, PDU set error rate, PDU set throughput). PDUs and PDUs sets may be characterized by intra-PDU set dependencies (*e.g.,* varying importance among PDUs, and/or presence of redundant PDUs), and/or inter-PDU set dependencies (*e.g.,* next /new PDU sets may be similar to or different from previous PDU sets). PDU sets may be characterized by jitter and/or non-integer periodicity values (*e.g.,* due to PDU set generation rate that may typically follow video frame generation rate at 60 fps or 120 fps). PDU sets may be characterized by variable periodicity values (*e.g.,* due to video encoder which may vary frame generation rate during runtime).

Throughout the embodiments herein, WTRU actions related to application actions and/or AS-layer actions for ensuring/supporting differentiated QoS, may correspond to one or more of the following actions. For example, WTRU action may include determining metadata of an application (*e.g.*, XR application), determining/generation of application content, performing measurements and reporting, handling/forwarding of data/PDUs/PDU sets and handling QoS associated with PDUs/PDU sets, and/or handling/forwarding of information related to connectivity with network and/or other WTRUs. The WTRU determining metadata of an application may involve determining one or more of the FoV/visual perimeters, 2D/3D size, border, spatial attributes and boundaries of FoV, based on measurements in any spatial dimensions, including but not limited to longitude, latitude, altitude, depth, roll, pitch, and/or yaw in one or more coordinate systems (*e.g.*, cartesian, spherical). The WTRU determining metadata of an application may involve determining the quality of the FoV content. For example, the WTRU may determine whether the FoV content is of high quality, which in the case of an image, may be quantified and assessed by the image resolution (*e.g.*, number of density of megapixels). The WTRU determining metadata of an application may involve determining the importance and/or priority of the FoV content. The importance may be associated with the spatial importance and/or temporal importance of content/data. For example, the spatial/temporal importance value may indicate the absolute or relative importance associated with the FoV content. Spatial importance may be associated with one or more segments/tiles/slices/positions of FoV in spatial dimension. Temporal importance may be associated with one or more frames/subframes of FoV in time dimension.

The WTRU determining/generation of application content may involve determining/capturing the one or more 2D/3D images/video frames associated with an FoV boundary / perimeter / border as defined by the FoV metadata by the WTRU/node for itself and/or on behalf of another WTRU/node. For FoV content mapping, the WTRU may determine the images/video frames using visual sensors (*e.g.*, 2D/3D camera, lidar), RF sensors (*e.g.*, RF transceiver, RADAR), audio sensors (*e.g.*, sonar), and/or the like. Herein, the mapping of FoV may also be referred to as sensing of FoV content or capturing of FoV content. The WTRU determining/generation of application content may include recording/capturing of audio frames, either as part of the real environment or as part of an overlaid sound-track/audio file with the audio file originating from a source other than the current real environment being mapped.

The WTRU may perform measurements of pose (*e.g.*, 6 degree(s) of difference (DoD)/3DoD orientation, location/position), rate of motion/movement, and/or the like of the user/WTRU and/or other objects (*e.g.*, virtual or real) which the user may be interacting with. The WTRU may send and/or report the pose measurements to network, periodically or when detecting event triggers (*e.g.*, change in pose measurements above/below a threshold). The WTRU may perform measurements of one or more of reference signals (*e.g.*, SSB, channel state information (CSI)-SR, physical reference signal (PRS), sidelink reference signal (RS)), GNSS signals, unlicensed carriers, ultra-wideband signals, LIDAR signals, visual signals, and/or the like. The WTRU may perform measurements of the radio link interfaces associated with the WTRU (*e.g.*, Uu link, SL). The WTRU may trigger transmission and/or measurement of reference signals in other one or more WTRUs (*e.g.*, via Uu link and/or sidelink). The WTRU may send a measurement report to a network and/or another WTRU.

The WTRU may perform handling/forwarding of data/PDUs/PDU sets and handling QoS associated with PDUs/PDU sets. The data may include any of media/image/video frames, sensor data, and measurement data (*e.g.*, pose measurements, link/channel measurements) determined by WTRU, possibly for supporting an application/service/network request associated with the WTRU. The WTRU may send and/or receive data, to/from one or more destinations including RAN node (*e.g.*, gNB), CN function/entity, and/or application function (*e.g.,* hosted in WTRU or in network). The WTRU may perform splitting/merging of data/PDUs in one or more QoS flows into one or more forwarding configurations during transmission/receptions.

The WTRU may perform handling and/or forwarding of information related to connectivity with network and/or other WTRUs. For example, the WTRU may send capability information to a network, which may include a capability for supporting one or more interfaces and/or a capability to coordinate and/or interact with other WTRUs/devices (*e.g.*, via SL interfaces), which may be co-located or non-co-located with the WTRU. The WTRU may also, or alternatively receive a configuration, which includes receiving RRC configuration from gNB and/or NAS-layer configuration from a CN. The WTRU may also, or alternatively send and/or receive assistance data to/from network associated with traffic, QoS, scheduling, and/or the like, for supporting UL/DL transmissions. The WTRU may also, or alternatively, send requests for radio resources and/or resource grants (*e.g.*, dynamic grants, semi-static/configured grants).

If a WTRU is configured to use CBG based transmissions by receiving the higher layer parameter codeBlockGroupTransmission for PDSCH or codeBlockGroupTransmission in PUSCH-ServingCellConfig, the WTRU may determine the number of CBGs for a PUSCH transmission as shown in Equation (1) below:

$$\text{Equation (1)} \qquad M = \min(N, C)$$

where N is the maximum number of CBGs per transport block as configured by maxCodeBlockGroupsPerTransportBlock for PDSCH or in PUSCH-ServingCellConfig, and C is the number of code blocks in the transport block (TB) (*e.g.*, according to the procedure defined in *3GPP TR 38.212-Multiplexing and channel coding (Release 16) (V16.2.0))*.

If a WTRU is configured to transmit code block group-based transmissions by receiving the higher layer parameter codeBlockGroupTransmission in PUSCH-ServingCellConfig for an initial transmission of a TB as indicated by the *'New Data Indicator'* field of the scheduling downlink control information (DCI), the WTRU may expect that the *CBGTI* field indicates each of the CBGs (*e.g.*, all the CBGs) of the TB are to be transmitted, and the WTRU may include each of the code block groups (*e.g.*, all the code block groups) of the TB. If a WTRU is configured to transmit code block group-based transmissions by receiving the higher layer parameter codeBlockGroupTransmission in PUSCH-Serving-CellConfig for a retransmission of a TB as indicated by the *'New Data Indicator'* field of the scheduling DCI, the WTRU may include the CBGs (*e.g.*, only the CBGs) indicated by the *CBGTI* field of the scheduling DCI.

A bit value of '0' in the *CBGTI* field may indicate that the corresponding CBG may not be transmitted and '1' indicates that the corresponding CBG may be transmitted. The order of *CBGTI* field bits may be such that the CBGs are mapped in order from CBG number 0 onwards starting from the MSB.

CBG based transmissions may be beneficial for traffic with large transport block size since, in the event of erroneous reception, a fraction CBG of the total transport block may need to be retransmitted (*e.g.*, only a fraction CBG of the total transport block may need to be retransmitted). XR traffic may be characterized by large payload sizes and, at times, bursty packet (consequently large TB) in addition to frequent rate of arrival as well as quasi-periodic. As a result, XR services may demand high capacity together with strict low latency requirement. However, HARQ re-transmission for large TB sizes for XR services may be expected to resource utilization and consequently impact system capacity. Therefore, CBG based transmissions for XR may improve resource utilization and capacity significantly. However, CBG based transmission may add overhead to HARQ feedback (*e.g.*, 1 bit addition on DCI per CBG). Currently, the number of CBs and CBGs in TBs may be fixed and no application/PDU level awareness (information) may be available to WTRU and/or gNB when it does segmentation of TBs and determines number of CBGs to use. Each segment and PDU (*e.g.*, all segments and PDUs) may be given equal importance thereby limiting the possibility of applying efficient methods for dynamic adaptation of number of CBGs in TB to the XR traffic.

Embodiments may be described herein to maintain overhead and/or improve efficiency in HARQ feedback as the number of CBGs increases. Embodiments may also be described herein to perform grouping of CBs in a TB dynamically according to PDU/PDU set level importance priority.

Described herein may be embodiments for supporting CBG based transmissions for XR services. A WTRU may adapt the number of CBGs used for UL transmission of TBs dynamically and/or semi-statically by selecting from the set of values used for the number of CBGs based on attributes of the PDUs/PDU sets, including the required bound on QoS, received from higher layer. The WTRU may send assistance information network (*e.g.*, base station) regarding the selected number of CBG to be used during UL transmission and starts.

The WTRU may use explicit or implicit information/indication received from the application/higher layer/network to determine the size of the TB and the number of CBGs it can use when transmitting in UL and send indication to network (base Station). For example, The WTRU may periodically or aperiodically/dynamically receive information in RRC signaling, MAC CE, DCI, NAS-layer signalizing and/or application layer signaling.

The traffic information obtained by each WTRU in the collaborative group of WTRUs from application/higher layer/network for may include but may not be limited to identifiers/IDs, traffic types associated with the data flows per-application, attributes of the traffic supported, and/or QoS requirements or expected QoS associated with the data. The identifiers/IDs may include identifiers/IDs associated with an application (*e.g.*, application ID, service ID, session ID, application configuration ID). The identifiers/IDs may include a group ID (*e.g.*, associated with group of QoS flows, group of forwarding configurations, group of devices/WTRUs). The identifiers/IDs may include IDs of individual QoS flows, mapping configurations, and/or forwarding configurations. The identifiers/IDs may include a data type/message ID (*e.g.*, PDU set ID, PDU ID, IDs associated with pose information, FoV information, media/video frame information). The identifiers/IDs may include an Association ID (*e.g.*, ID or sequence number indicating the association between one or more UL PDUs/PDU sets/flows and one or more DL PDUs/PDU sets/flows).

The traffic information obtained by each WTRU in the collaborative group of WTRUs from application/higher layer/network may include traffic types associated with the data flows per-application. The WTRU may receive information on different data/QoS flows associated with an application, where the data type may include video data (*e.g.*, I-frame data, P-frame data, B-frame data), RGB-D data, 360 degrees video data, haptics data, pose/positioning data, audio data, and/or the like.

The traffic information obtained by each WTRU in the collaborative group of WTRUs from application/higher layer/network may include attributes of the traffic supported. For example, the WTRU may receive information on traffic characteristics/patterns of the different data/QoS flows associated with an application, including whether the data is periodic, aperiodic, semi-persistent, quasi-periodic, and/or the like. The traffic characteristics may include the one or more periodicity values of the flow. The WTRU may receive information on the number of PDUs expected per PDU set in one or more flows per application. The information of the number of PDUs per PDU set may also include statistical/distribution information such as mean, minimum, maximum, standard deviation values. The information related to PDU set may include a size of the PDU set (*e.g.*, total payload, number of PDUs in PDU set), an indication of start/first and/or end/last PDU of PDU set, and/or an indication of the association/dependency of the PDUs in a PDU set (*e.g.*, ID of PDU set, importance/priority value).

The traffic information obtained by each WTRU in the collaborative group of WTRUs from application/higher layer/network may include QoS requirements or expected QoS associated with the data. For example, the WTRU may receive the QoS requirements or expected QoS of the one or more flows associated with application, which may include data rate, latency, reliability, absolute/relative priority values, and/or the like. The information on QoS requirements may also, or alternatively, include statistical/distribution information such as mean, minimum, maximum, standard deviation values. The WTRU may also, or alternatively, receive an indication that such QoS requirements or expected QoS may refer to different QoS granularities, such as per-PDU, per-PDU subgroup (*e.g.*, one or more PDUs) within PDU set, per PDU set, per-group of PDU sets, per flow, and/or per session.

The WTRU may send information to the network for supporting dynamic selection of the number of CBGs during UL transmission. For example, the WTRU may send information to the network associated with data communications (*e.g.*, for receiving/transmitting data in one or more flows) and/or for enabling dynamic selection of the number of CBGs during UL transmission based on the available traffic characteristics in one or more flows. The WTRU may send the information to the network, via AS layer signaling (*e.g.*, RRC signaling and/or messages, MAC CE, control PDU, or UCI) or Non-AS (NAS) layer signaling (*e.g.*, PDU session related messages).

The information sent by the WTRU may include applications supported by the WTRU. The WTRU may send the number and/or IDs associated with the applications supported. The WTRU may also, or alternatively, send information on the relative/absolute priority values associated with the supported application.

The information sent by the WTRU may include data flows associated with the application. The WTRU may send the number and/or IDs associated with the data flows supported per-application. The WTRU may also, or alternatively, send information on the relative/absolute priority values associated with the data flows.

The information sent by the WTRU, may include data/traffic types associated with the data flows per-application. The WTRU may send information on a data type carried by different flows associated with an application in each WTRU. The different flows associated with the application in each WTRU may include, for example, video data (*e.g.*, I-frame data, P-frame data, B-frame data), RGB-D data, 360 degrees video data, haptics data, pose/positioning data, and/or audio data.

The information sent by the WTRU may include traffic characteristics and/or parameters of the data/traffic associated with the data flows per-application and/or per-WTRU. The WTRU may send information on characteristics of the single or multiple flow traffic associated with the applications, including whether the data in each flow is periodic, aperiodic, semi-persistent, quasi-periodic, and/or the like. The WTRU may send information on the number of PDUs expected per PDU set in one or more flows per-application. The information on the number of PDUs per PDU set may also, or alternatively, include statistical information such as mean, minimum, maximum, standard deviation values. The WTRU may send the QoS requirements (per-PDU and/or per-PDU set) of the one or more flows associated with each application, including the data rate, latency, reliability, absolute/relative priority values, and/or the like.

The information sent by the WTRU may include a preferred number of CBGs per application to use when transmitting TBs in UL. For example, the WTRU may send to the network (*e.g.*, base station) the optimal number of CBGs it uses when sending TBs in UL.

The WTRU may send to the network the above information under varied conditions. For example, the varied conditions may include detecting one or more events. For example, the WTRU may send the above information to the network during connectivity/session establishment and/or (re)configuration. For example, the WTRU may send the above information during RRC connection, a PDU session, application session establishment and/or (re)configuration. The WTRU may send the above information when changing RRC state in any of the WTRUs in the collaborative WTRU group.

The WTRU may send the above information when changing/updating data flows per application. For example, the WTRU may send the above information when adding new flows and/or releasing existing flows associated with an application.

The WTRU may send the above information when receiving higher layer/application information. For example, the WTRU may send the above information when receiving an indication (*e.g.*, from application function hosted in WTRU or in network) indicating a change in data types supported, traffic characteristics, QoS requirements, and/or the like.

The WTRU may send the above information when changing/updating the number of CBGs used for UL transmission of TBs.

The WTRU may receive configuration information from a network associated with power saving schemes applicable for a group of flows/WTRUs. For example, the WTRU (*e.g.*, anchor WTRU) may receive configuration information from the network based on which the WTRU may dynamically and/or semi-statically adapt the number of CBGs it uses when transmitting TBs in the UL. The configuration information received by the WTRU may include one or more values. The one or more values may include sets of values related to the number of CBGs used for UL transmission. For example, the WTRU may receive the maximum number of CBGs per TB it is allowed to use. The WTRU may also, or alternatively, receive a set of possible number CBGs it may adapt to per given TB per application.

The configuration information received by the WTRU may include threshold values related to the TB size per application. For example, the WTRU may receive threshold value related to the minimum TB size for using CBG based, and/or TB based transmission.

The configuration information received by the WTRU may include threshold values related to QoS/joint QoS (*e.g.*, PER PDB). For example, the WTRU may receive threshold values related to QoS required per PDU/PDU set. The specific QoS related value may include, for example, PDU/PDU set level delay bound and/or PDU/PDU set level error rate bound. The WTRU may additionally, or alternatively, receive a joint QoS requirement on the PDUs across the multi flow traffic, for example, the joint latency bound associated with the time difference between the reception time of a PDU in a first flow and another PDU in a second flow.

The configuration information received by the WTRU may include threshold values related to the number of HARQ retransmissions. For example, the WTRU may receive a threshold value related to the maximum number of HARQ retransmissions allowed.

The configuration information received by the WTRU may include threshold values related to the number of negative acknowledgements (NACKS) received. For example, the WTRU may receive a threshold value related to the number of NACKS received during initial transmission a TB for selecting a different number of CBGs during UL transmission.

The configuration information received by the WTRU may include threshold values related to event counter. For example, the WTRU may receive a threshold value related to an event counter. The event counter may be related to, for example, the number of initial UL/DL transmission.

The configuration information received by the WTRU may include configured resource grants. For example, the WTRU may receive configured resource grants for uplink resources. The configured resource grants may be a set of predetermined resource blocks which are pre-allocated to the WTRU with a given periodicity for uplink transmission of one or more physical uplink shared channel (PUSCH).

The configuration information received by the WTRU may include a delay budget value. For example, the delay budget value may include a PDU/PDU set level delay bound. The delay budget value may set the maximum duration that a PDU/PDU set can spend being processed for transmission by the lower layers in the WTRU and over the air until it arrives at the receiver (*e.g.*, at the MAC entity of the receiver).

The WTRU (*e.g.*, any WTRU in a collaborative WTRU group) may receive the configuration information, via AS layer signaling (*e.g.*, RRC signaling/messages, MAC CE or DCI) or Non-AS (NAS) layer signaling (*e.g.*, PDU session related messages), for example.

The WTRU may assist the network to dynamically and/or semi-statically adapt the number of CBGs used for UL transmission of TBs to the XR traffic (*e.g.*, UL retransmission of TBs to the XR traffic). A WTRU may assist the network (*e.g.*, base station) in adapting the number of CBGs when transmitting a TB in UL (*e.g.*, retransmitting a TB in UL). The WTRU may have received a set of values related to the number of CBGs for a given size of TB it can adapt to. The WTRU may determine whether dynamic PUSCH resource grants are later in time than a second PUSCH transmission occasion corresponding to the configured resource grants. If the dynamic PUSCH resource grants are later in time than a second PUSCH transmission occasion corresponding to the configured resource grants and at least one of a plurality of CBGs corresponding to one or more PDUs of a first PDU set is not successfully transmitted, the WTRU may determine whether to retransmit the at least one of the plurality of CBGs corresponding to the one or more PDUs of the first PDU set using the dynamic PUSCH resource grants or using the second PUSCH transmission occasion corresponding to the configured resource grants based on an amount of time remaining in a delay budget for the first PDU set. In one example, the WTRU may receive a first and/or default number of CBGs (*CBG1*) and a second number of CBGs (CBG2) for a given size of TB where *CBG1 < CBG2*. The WTRU may then receive, from application/higher layer, an XR data burst consisting of one or more PDU/PDU set and an indication of PDU/PDU set level delay bound (*e.g.*, in PDU headers). The WTRU may use the PDU/PDU set level delay bound indicated (*e.g.*, in PDU/PDU set headers) to determine whether to use the first and/or default number of CBGs (*CBG1*) or the second number of CBGs (*CBG2*) when transmitting the TB in the UL. For example, if the PDU/PDU set level delay bound indicated is greater than the configured threshold related to the delay bound (*e.g.*, XR data burst may be transmitted over multiple small size TBs over multiple slots), the WTRU may use the first and/or default number of CBGs (CBG1) when transmitting the TB in the UL. The second number of CBGs (CBG2) may be transmitted in the received dynamic resource grants. If the PDU/PDU set level delay bound indicated is less than the configured threshold related to the delay bound (*e.g.*, XR data burst needs to be transmitted in large TB over a single slot), the WTRU may send an indication to the network (NW) for using the second number of CBGs for its next UL transmission, and/or the WTRU may receive a resource grant from gNB and transmit the TB in UL using the second number of CBGs (CBG2) in the received resource grant. If every second number of CBGs (CBG2) are transmitted in the next UL transmission, the WTRU may send an indication for cancelling the received dynamic resource grants. In addition, the at least one CBGs to be retransmitted is negatively acknowledged.

The WTRU may send an indication that the second PUSCH transmission occasion corresponding to the configured resource grants includes a retransmission of the at least one CBG corresponding to one or more PDUs of the first PDU set. The indication may be a hybrid automatic repeat request (HARQ) process ID. In an example, each PUSCH transmission may have an associated HARQ process which is running in the MAC layer. Since multiple HARQ processes could be running in parallel, each HARQ process may be assigned a HARQ process ID/number. In the legacy procedure, a given PUSCH transmission may maintain the HARQ process ID it was assigned during initial transmission and HARQ retransmissions. The HARQ processes ID may be released, and possibly assigned to a subsequent PUSCH transmission, only after the MAC layer receives an ACK indicating successful reception of the PUSCH that the HARQ process ID belonged to.

If the dynamic PUSCH resource grants are no later in time (e.g., earlier in time) than a second PUSCH transmission occasion corresponding to the configured resource grants, the WTRU may retransmit the at least one CBG corresponding to one or more PDUs of the first PDU set via the dynamic PUSCH resource grants.

The WTRU may adapt the number of CBGs it uses when transmitting in the UL incrementally or decrement from a set of available number of CBGs (e.g., $\{CBG_0 > CBG_1 > CBG_2\}$). The set of numbers of CBGs (e.g., $\{CBG_0 > CBG_1 > CBG_2\}$) the WTRU is set to adapt to may be received directly from the network as configuration information or the set may be determined by the WTRU based on past and/or present behavior of the UL traffic. In an example, the WTRU may send assistance information to the network regarding the UL traffic including the number of PDUs expected per PDU set in one or more flows per-application by providing statistical information such as mean, minimum, maximum, standard deviation values. Based on the statistical values provided, the network may determine the set of numbers of CBGs the WTRU may adapt to and/or send an indication to WTRU. Alternatively, the WTRU may determine the set of number of CBGs based on the application/higher layer information available to it. The WTRU may send assistance information to network indicating the set of number of CBGs it prefers to use.

The WTRU may receive feedback indicating whether one or more CBGs corresponding to one or more PDUs was successfully received or was not successfully received. The feedback may indicate dynamic PUSCH resource grants for retransmission of the one or more CBGs corresponding to one or more PDUs which were not successfully received. For example, the WTRU may, subsequently, start transmitting the first set of TBs in UL using an initial number of CBGs (e.g., $CBG_0$) and/or may initiate a counter to determine the number of initial UL transmissions conducted before receiving a given number of NACKs. If the number of initial UL transmissions (e.g., determined by the counter) exceeds a threshold, $T_1$, without receiving NACKs for at least X% of CBGs relative to the total number of CBGs in the TB, the WTRU may perform a series of actions. For example, the WTRU may send an indication to the network for using $CBG_1$ number of CBGs for UL transmission starting with the next TB, and/or receive from the network an acknowledgement for using $CBG_1$ number of CBGs. In addition, the feedback may be received in downlink control information (DCI).

After receiving the acknowledgement for using $CBG_1$, the WTRU may start transmitting the TBs using $CBG_1$ number of CBGs resulting in overhead reduction $CBG_0 - CBG_1$ for HARQ-DCI. The WTRU may further restart the counter and/or start counting the number of initial UL transmissions conducted before receiving a given number of NACKs. If the number of initial UL transmissions (e.g., determined by the counter) exceeds a threshold, $T_2$, without receiving NACKs for at least Y% of CBGs relative to the total number of CBGs in the TB, the WTRU may perform a similar set of actions. For example, the WTRU may send an indication to network for using $CBG_2$ number of CBGs for UL transmission starting with the next TB, and/or receive from the network an acknowledgement for using $CBG_2$ number of CBGs.

After receiving the acknowledgement for using $CBG_2$, the WTRU may start transmitting the TBs using $CBG_1$ number of CBGs resulting in overhead reduction $CBG_1 - CBG_2$. If on the other hand, the WTRU receives NACKs for at least X% or Y% of CBGs before the counter exceeds threshold, $T_1$ or $T_2$, the WTRU may maintain the number of CBGs it is currently using and/or reset the counter.

The WTRU may adapt to a TB specific number of CBGs in a multi-slot transmission of multiple TBs using a single DCI. In multiple PUSCH (multi-slot) scheduling, WTRU may be configured to map PDU sets to TBs such that TBs may be scheduled for UL transmission across multiple slots in decreasing order of priority (e.g., QoS). The WTRU then may determine the number of CBGs to use for each TB slot according to the priority. The determination of number of CBGs may result in using different number of CBGs across the TBs in the multi PUSCH scheduling. In an example, the WTRU may receive configuration information from network which may include the maximum number of CBGs that may be used across each TB (e.g., all TBs) scheduled for UL transmission in multiple slots. The configuration information from the network may also, or alternatively, include a set of intervals, which may or may not overlap, and which may be related to QoS requirements (e.g., delay bound) and the number of CBGs to use corresponding to each interval of QoS requirement. The configuration information from network may also, or alternatively, include a set of rules for mapping PDUs/PDU sets to the scheduled TBs according to a decreasing order PDU/PDU set level QoS requirement (e.g., per PDU/PDU set delay bound). For example, PDUs/PDU sets with the lower delay bound may be mapped in the first TB and so on.

The WTRU may start receiving higher layer data burst consisting of one or more PDU sets and/or an indication of per-PDU set delay bound and per-data burst delay bound (e.g., in PDU headers). The WTRU may determine the total number of TBs needed for transmitting each PDU set (e.g., all PDU sets) based on the per-PDU set delay bound and per-data burst delay bound. The WTRU may map PDUs/PDU sets to a corresponding TB according to the increasing order of the per-PDU set delay bounds and per-data burst delay bounds. For each of the TB in the multi slot scheduling, the WTRU may determine the number of CBGs it can use the PDU/PDU set level delay bound indicated, the total number of TBs to be used, and/or the maximum number of CBGs across each of the TBs (*e.g.*, all TBs) to be scheduled in the multiple slots. The WTRU may send assistance information to the network containing the number of CBGs per TB that may be used during UL transmission of the multiple PUSCH. The WTRU may receive scheduling grants including acknowledgement for using the determined number of CBGs per TB when transmitting multi-slot traffic.

In an example embodiment, as further described herein, a WTRU may determine the number of CBGs to use per TB when transmitting XR data in UL based on QoS of the XR data (*e.g.*, delay bound for transmitting PDU sets). The WTRU may be configured to receive configuration information from a gNB that includes first/default number of CBGs per TB (*CBG1*) and second number of CBGs per TB (*CBG2*), where *CBG1 < CBG2*, and delay threshold. The WTRU may receive from a higher layer, XR data burst including of one or more PDU sets and/or an indication of data burst level delay bound (*e.g.*, in PDU headers). If the delay bound is greater than the delay threshold (*e.g.*, XR data burst may be transmitted over multiple small size TBs over multiple slots), the WTRU may use default number of CBGs per TB (*CBG1*) when transmitting the data in UL. If the delay bound is less than the delay threshold (*e.g.*, XR data burst needs to be transmitted in large TB over a single slot), the WTRU may transmit an indication to NW on using second number of CBGs for next UL transmission, receive resource grant from gNB, and/or transmit TB (carrying XR data) consisting of second number of CBGs (*CBG2*) using the received resource grant.

In another example embodiment, as further described herein, a WTRU may adjust the number of CBGs it uses when transmitting in the UL based on the percentage of CBGs for which NACK is received during a specified period. A WTRU may receive configuration information that comprises of number (*e.g.*, $\{N_0 > N_1 > N_2\}$) of CBGs to use when transmitting in UL, and/or counter threshold values (*e.g.*, $C_1, C_2$) for the number of initial UL transmissions before receiving NACK for at least X% of CBGs out of the total number of CBGs used. The WTRU may transmit the first TB with an initial number (*e.g.*, $N_0$) of CBGs in UL and/or start a counter to determine the number of initial UL transmissions before receiving NACK. If the number of initial UL transmissions (e.g., determined by the counter) exceeds the threshold $C_1$ before receiving NACK for at least X% of CBGs, the WTRU may send an indication to network for using $N_1$ number of CBGs in the next UL transmission and/or the WTRU may rest the counter and start using $N_1$ number of CBGs after receiving acknowledgement from NW. HARQ feedback overhead may decrease by $N_0 - N_1$. If, while transmitting TBs with $N_1$ number of CBGs, the number of initial UL transmissions exceeds the threshold, $C_2$, before receiving NACK for at least X% of CBGs, the WTRU may send indication to network for using $N_2$ number of CBGs in the next UL transmission and/or reset the counter and start using $N_2$ number of CBGs after receiving acknowledgement from NW. HARQ feedback overhead may decrease by $N_0 - N_2$. If the WTRU receives NACK for at least X% of CBGs before counter exceeds threshold, $C_1$ or $C_2$, the WTRU may maintain the number of CBGs it is currently using and/or reset the counter.

In another example embodiment, as described herein, a WTRU may be configured to map PDU sets to TBs such that TBs are scheduled in UL in decreasing order of priority (*e.g.*, QoS) in multiple PUSCH (multi-slot) scheduling. The WTRU may determine the number of CBGs to use for each TB according to the priority, and may result in using different number of CBGs across the TBs in the multi PUSCH scheduling. The WTRU may be configured to receive configuration information that may include maximum number of CBGs in each TB (*e.g.*, all TBs). The WTRU may receive, from a higher layer, a data burst consisting of one or more PDU sets and/or an indication of per-PDU set delay bound and per-data burst delay bound (*e.g.*, in PDU headers). The WTRU may determine the number of TBs/slots for transmitting each PDU set (*e.g.*, all PDU sets) based on the per-PDU set delay bound and per-data burst delay bound. The WTRU may determine the number of CBGs per TB (carrying each PDU set) in each TB (*e.g.*, all TBs) based on the maximum number of CBGs, delay bounds, and/or determined number of TBs/slots. The WTRU may transmit an indication to the gNB on the determined number of CBGs per TB. The WTRU may receive resource grants for multiple TBs (*e.g.*, multi-slot scheduling). The WTRU may transmit TBs (*e.g.*, carrying PDU sets) including the determined number of CBGs per TB using the received resource grants.

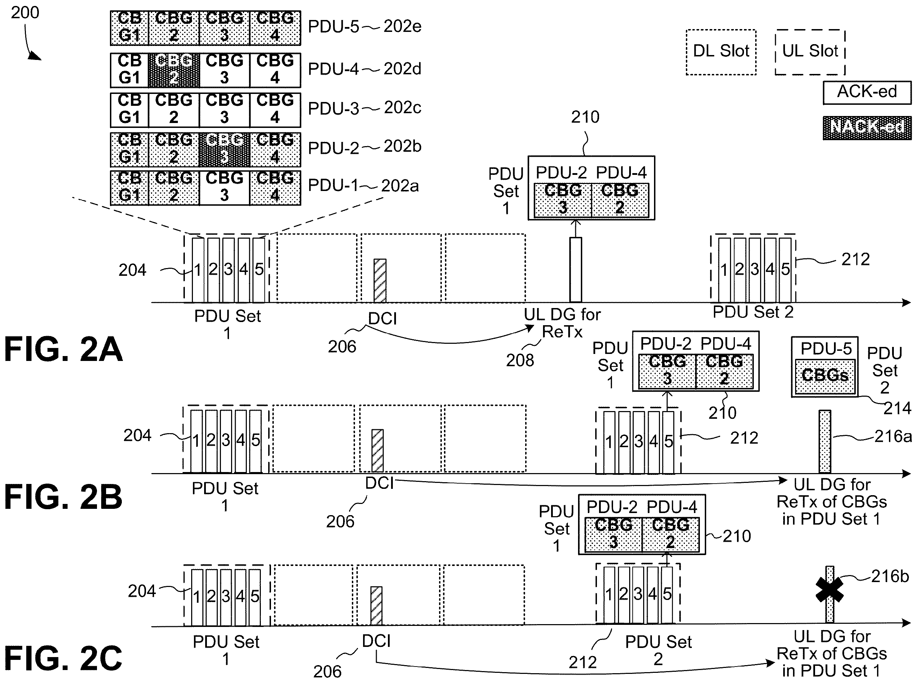

FIGs. 2A-2C illustrate three example retransmissions of at least one CBG corresponding to a first PDU set after the at least one CBG was not successfully transmitted during the first PUSCH transmission occasion. The PDU set 204 may include multiple PDUs 202a-202e. Each PDU 202a-202e may include multiple CBGs (*e.g.*, 4 CBGs). The CBGs may be acknowledged (ACK-ed) and/or not acknowledged (NACK-ed). For example, CBG 3 in PDU 202b and CBG 2 in PDU 202d are NACK-ed, while CBGs 1-4 in PDU 202c are ACK-ed. Similarly, the PDU set 212 may include multiple PDUs (*e.g.*, 5 PDUs) and each PDU may include multiple CBGs. Each PUSCH transmission occasion (*e.g.*, the first PUSCH transmission occasion, the second PUSCH transmission occasion, and the like) may show up within an uplink slot (UL slot). One or more downlink slots (DL slot) may exist between the first PUSCH transmission occasion and the second PUSCH transmission occasion.

During the first PUSCH transmission occasion, the WTRU may have successfully transmitted one or more CBGs (*e.g.*, all CBGs) corresponding to the first PDU set 204. The WTRU may fail to transmit at least one CBG corresponding to the first PDU set 204 during the first transmission occasion. For example, the WTRU may fail to transmit NACK-ed CBG 3 in PDU 202b and NACK-ed CBG 2 in PDU 202d. The WTRU may receive feedback when at least one CBG corresponding to the first PDU set 204 was not successfully transmitted. For example, the at least one CBG corresponding to the first PDU set 204 which was not successfully transmitted may comprise a bundle 210 of one or more CBGs. The bundle 210 may include every NACK-ed CBG in the first PDU set 204, for example, CBG 3 in PDU 202b and CBG 2 in PDU 202d. The feedback may be received in downlink control information (DCI) 206. The feedback received in DCI 206 may be received within a DL slot between one or more DL slots.

The WTRU may determine whether a dynamic PUSCH resource grants are later in time than a second PUSCH transmission occasion. In FIG. 2A, the WTRU may determine that the dynamic PUSCH resource grants are not later in time (*e.g.*, earlier in time) than a second PUSCH transmission occasion. Therefore, the WTRU may retransmit the at least one CBG corresponding to the first PDU set 204 which was not successfully transmitted via the dynamic PUSCH resource grants at 208 before the second PUSCH transmission occasion. The PDU set 212 may be transmitted at the second PUSCH transmission occasion.

In FIG. 2B, the bundle 210 comprising every NACK-ed CBG in the first PDU set 204 (*e.g.*, CBG 3 in PDU 202b and CBG 2 in PDU 202d) may not be successfully transmitted at the first PUSCH transmission occasion. After receiving the feedback in DCI 206, the WTRU may determine that the dynamic PUSCH resource grants are later in time than a second PUSCH transmission occasion. The WTRU may retransmit the at least one CBG corresponding to the first PDU set 204 which was not successfully transmitted (*e.g.*, the bundle 210) via the second PUSCH transmission occasion corresponding to the configured resource grants. In addition, the WTRU may compare the amount of time remaining in a delay budget for the first PDU set 204 and a threshold. In an example, the threshold may refer to an absolute time given in $T$ milliseconds (ms). The WTRU may determine that the amount of time remaining in the delay budget for the first PDU set 204 is greater than the threshold. The bundle 210, which comprises every NACK-ed CBG in the first PDU set 204 (*e.g.*, CBG 3 in PDU 202b and CBG 2 in PDU 202d), may be retransmitted along with one or more CBGs in PDU set 212 (*e.g.*, PDUs 1-4 in PDU set 212) at the second PUSCH transmission occasion. One or more extra CBGs of the PDU set 212 may not be transmitted at the second PUSCH transmission occasion. The WTRU may transmit the one or more extra CBGs of the PDU set 212 (*e.g.*, PDU 214) in the dynamic PUSCH resource grants allocated for retransmission of the at least one CBG corresponding to one or more PDUs of the first PDU set 204 at 216a.

In FIG. 2C, the bundle 210 comprising every NACK-ed CBG in the first PDU set 204 (*e.g.*, CBG 3 in PDU 202b and CBG 2 in PDU 202d) may not be successfully transmitted at the first PUSCH transmission occasion. After receiving the feedback in DCI 206, the WTRU may determine that the dynamic PUSCH resource grants are later in time than a second PUSCH transmission occasion. The WTRU may retransmit the at least one CBG corresponding to the first PDU set 204 which was not successfully transmitted (*e.g.*, the bundle 210) via the second PUSCH transmission occasion corresponding to the configured resource grants. In addition, the WTRU may compare the amount of time remaining in a delay budget for the first PDU set 204 and a threshold. The WTRU may determine that the amount of time remaining in the delay budget for the first PDU set 204 is less than the threshold. The bundle 210, which comprises every NACK-ed CBG in the first PDU set 204 (*e.g.*, CBG 3 in PDU 202b and CBG 2 in PDU 202d), may be retransmitted along with every CBG in every PDU of the PDU set 212 at the second PUSCH transmission occasion. If every CBG corresponding to the one or more PDUs of the second PDU set 212 is transmitted in the second PUSCH transmission occasion corresponding to the configured resource grants, the WTRU may send an indication for cancelling the dynamic PUSCH resource grants at 216b. The above-mentioned methods may utilize available configured resource grants for retransmission of CBGs before expiry of the PDU set delay budget for the first PDU set 204. This may enable the WTRU to achieve the strict high reliability and low latency requirements placed on XR applications.

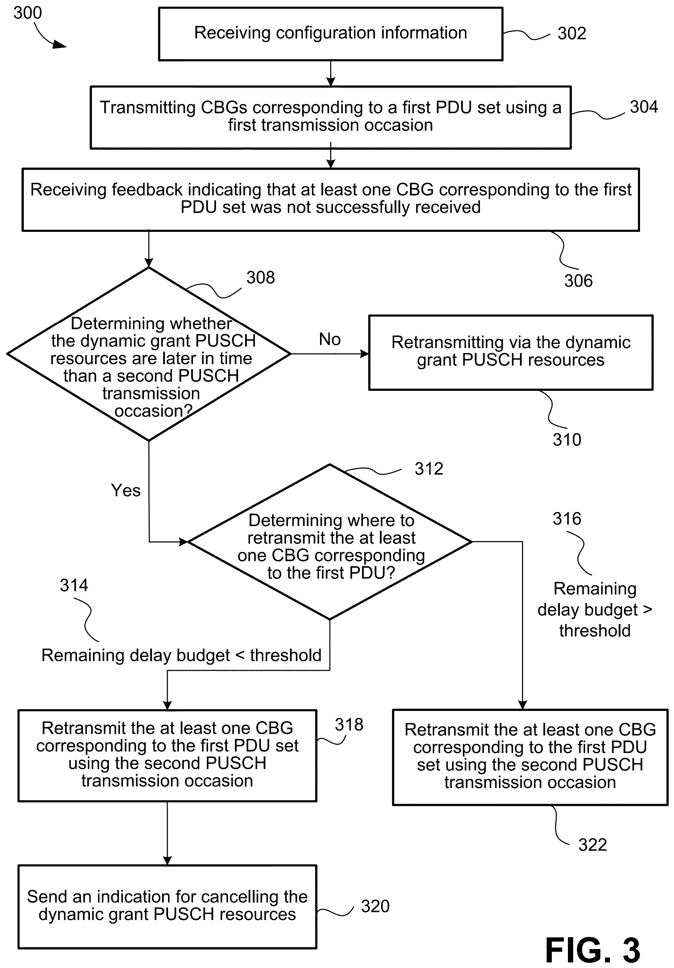

FIG. 3 is a flow chart illustrating a method performed by a WTRU to retransmit at least one CBG corresponding to the first PDU set after the at least one CBG corresponding to the first PDU set was not successfully transmitted during the first PUSCH transmission occasion. The method may cover, for example, the three example retransmissions discussed above in FIGs. 2A-2C. The method may include receiving configuration information at 302. The configuration information may include, for example, a delay budget value, and/or an indication of a configured resource grants for one or more physical uplink shared channel (PUSCH resources). At 304, the WTRU may transmit a plurality of codeblock groups (CBGs) corresponding to one or more protocol data units (PDUs) of a first PDU set using a first PUSCH transmission occasion corresponding to the configured resource grants. If at least one of the plurality of CBGs corresponding to the one or more PDUs of the first PDU set was not successfully received, the WTRU may receive feedback at 306. For example, the feedback may indicate dynamic PUSCH resource grants for retransmission of the at least one of the plurality of CBGs. The at least one of the plurality of CBGs corresponding to the one or more PDUs of the first PDU set to be retransmitted may be negatively acknowledged (NACK-ed). In one example, the feedback may be received in downlink control information (DCI). At 308, the WTRU may determine whether the dynamic PUSCH resource grants are later in time than a second PUSCH transmission occasion. If the dynamic PUSCH resource grants are not later in time (e.g., earlier in time) than a second PUSCH transmission occasion, the WTRU may retransmit the at least one CBG corresponding to one or more PDUs of the first PDU set via the dynamic PUSCH resource grants at 310 as shown in FIG. 2A. If the dynamic PUSCH resource grants are later in time than a second PUSCH transmission occasion, the WTRU may determine whether to retransmit the at least one of the plurality of CBGs corresponding to the one or more PDUs of the first PDU set using the dynamic PUSCH resource grants or using the second PUSCH transmission occasion corresponding to the configured resource grants at 312. For example, the determination may be based on the amount of time remaining in a delay budget for the first PDU set and a threshold.

For one example, if the remaining delay budget is less than the threshold at 314, the at least one CBG may be retransmitted using the second PUSCH transmission occasion corresponding to the configured resource grants at 318. One or more CBGs corresponding to one or more PDUs of a second PDU set may be transmitted in the second PUSCH transmission occasion corresponding to the configured resource grants. For example, if every CBG corresponding to the one or more PDUs of the second PDU set is transmitted in the second PUSCH transmission occasion corresponding to the configured resource grants, the WTRU may send an indication for cancelling the dynamic PUSCH resource grants at 320, as shown in FIG. 2C.

For another example, if the remaining delay budget is greater than the threshold at 316, the at least one CBG may be retransmitted using the second PUSCH transmission occasion corresponding to the configured resource grants at 322. At least one CBG corresponding to one or more PDUs of the second set may be transmitted in the dynamic PUSCH resource grants allocated for retransmission of the at least one CBG corresponding to one or more PDUs of the first PDU set as shown in FIG. 2B.

The WTRU may further send an indication that the second PUSCH transmission occasion corresponding to the configured resource grants includes a retransmission of the at least one CBG corresponding to one or more PDUs of the first PDU set. The indication may be a hybrid automatic repeat request (HARQ) process ID. For example, the configuration information may also include threshold values related to one or more HARQ transmissions. The WTRU may retransmit the at least one CBG corresponding to one or more PDUs of the first PDU set.

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods, apparatuses, and articles of manufacture, within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

Although foregoing embodiments may be discussed, for simplicity, with regard to specific terminology and structure, (e.g., radio frequency (RF), microwave, centimeter wave, micrometer wave, infrared (IR), ultraviolet (UV), visible light, etc.), the embodiments discussed, however, are not limited to thereto, and may be applied to other systems that use other forms of electromagnetic waves or non-electromagnetic waves such as acoustic waves, for example.

It is also to be understood that the terminology used herein is for the purpose of describing particular embodiments only, and is not intended to be limiting. As used herein, the term "video" or the term "imagery" may mean any of a snapshot, single image and/or multiple images displayed over a time basis, or the like, or any appropriate combination thereof. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to Figures. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media, which are differentiated from signals, include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

Variations of methods, apparatuses, articles of manufacture, and systems provided above are possible without departing from the scope of the invention. In view of the wide variety of embodiments that can be applied, it should be understood that the illustrated embodiments are examples only, and should not be taken as limiting the scope of the following claims. For instance, embodiments provided herein include handheld devices, which may include or be utilized with any appropriate voltage source, such as a battery or the like, providing any appropriate voltage.

Moreover, in embodiments provided herein, processing platforms, computing systems, controllers, and other devices containing processors are noted. These devices may contain at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (*e.g.*, Random Access Memory (RAM)) or non-volatile (*e.g.*, Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples may be implemented, individually and/or collectively, by a wide range of hardware, software, firmware, or virtually any combination thereof. In example embodiments, several portions of the subject matter described herein may be implemented via Application Specific Integrated Circuits (ASICs), Field Programmable Gate Arrays (FPGAs), digital signal processors (DSPs), and/or other integrated formats. Those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. Those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (*e.g.*, a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (*e.g.*, feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components contained within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (*e.g.*, bodies of the appended claims) are generally intended as "open" terms (*e.g.*, the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (*e.g.*, "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (*e.g.*, the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (*e.g.*, "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (*e.g.*, "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

**Itemized embodiments being part of the description**

1. A wireless transmit/receive unit (WTRU) comprising a processor configured to:

receive configuration information, the configuration information comprising a delay budget value, and an indication of a configured resource grants for one or more physical uplink shared channel (PUSCH) resources; transmit a plurality of codeblock groups (CBGs) corresponding to one or more protocol data units (PDUs) of a first PDU set using a first PUSCH transmission occasion corresponding to the configured resource grants; receive feedback indicating that at least one of the plurality of CBGs corresponding to the one or more PDUs of the first PDU set was not successfully received, wherein the feedback indicates dynamic PUSCH resource grants for retransmission of the at least one of the plurality of CBGs; determine that the dynamic PUSCH resource grants are later in time than a second PUSCH transmission occasion corresponding to the configured resource grants; determine whether to retransmit the at least one of the plurality of CBGs corresponding to the one or more PDUs of the first PDU set using the dynamic PUSCH resource grants or using the second PUSCH transmission occasion corresponding to the configured resource grants based on an amount of time remaining in a delay budget for the first PDU set, wherein the at least one CBG is transmitted using the second PUSCH transmission occasion corresponding to the configured resource grants if the remaining delay budget is less than a threshold, and the at least one CBG is transmitted using the second PUSCH transmission occasion corresponding to the configured resource grants if the remaining delay budget is greater than the threshold; and retransmit the at least one CBG corresponding to one or more PDUs of the first PDU set.

2. The WTRU of item 1, wherein the feedback indicating that the at least one of the plurality of CBGs corresponding to the one or more PDUs of the first PDU set was not successfully received is received in downlink control information (DCI).

3. The WTRU of item 1, wherein the at least one of the plurality of CBGs corresponding to the one or more PDUs of the first PDU set to be retransmitted is negatively acknowledged.

4. The WTRU of item 1, wherein the dynamic PUSCH resource grants are earlier in time than a second PUSCH transmission occasion corresponding to the configured resource grants, the processor is further configured to retransmit the at least one CBG corresponding to one or more PDUs of the first PDU set via the dynamic PUSCH resource grants.

5. The WTRU of item 1, wherein one or more CBGs corresponding to one or more PDUs of a second PDU set are transmitted in the second PUSCH transmission occasion corresponding to the configured resource grants.

6. The WTRU of item 5, wherein the processor is further configured to send an indication for cancelling the dynamic PUSCH resource grants if every CBG corresponding to the one or more PDUs of the second PDU set is transmitted in the second PUSCH transmission occasion corresponding to the configured resource grants.

7. The WTRU of item 1, wherein at least one CBG corresponding to one or more PDUs of the second set is transmitted in the dynamic PUSCH resource grants allocated for retransmission of the at least one CBG corresponding to one or more PDUs of the first PDU set.

8. The WTRU of item 1, wherein the processor is further configured to send an indication that the second PUSCH transmission occasion corresponding to the configured resource grants includes a retransmission of the at least one CBG corresponding to one or more PDUs of the first PDU set.

9. The WTRU of item 8, wherein the indication is a hybrid automatic repeat request (HARQ) process ID.

10. The WTRU of item 9, wherein the configuration information further comprises threshold values related to one or more HARQ transmissions.

11. A method performed by a wireless transmit/receive unit (WTRU), the method comprising:

receiving configuration information, the configuration information comprising a delay budget value, and an indication of a configured resource grants for one or more physical uplink shared channel (PUSCH) resources;

transmitting a plurality of codeblock groups (CBGs) corresponding to one or more protocol data units (PDUs) of a first PDU set using a first PUSCH transmission occasion corresponding to the configured resource grants;

receiving feedback indicating that at least one of the plurality of CBGs corresponding to the one or more PDUs of the first PDU set was not successfully received, wherein the feedback indicates dynamic PUSCH resource grants for retransmission of the at least one of the plurality of CBGs;

determining that the dynamic PUSCH resource grants are later in time than a second PUSCH transmission occasion corresponding to the configured resource grants;

determining whether to retransmit the at least one of the plurality of CBGs corresponding to the one or more PDUs of the first PDU set using the dynamic PUSCH resource grants or using the second PUSCH transmission occasion corresponding to the configured resource grants based on an amount of time remaining in a delay budget for the first PDU set, wherein the at least one CBG is transmitted using the second PUSCH transmission occasion corresponding to the configured resource grants if the remaining delay budget is less than a threshold, and the at least one CBG is transmitted using the second PUSCH transmission occasion corresponding to the configured resource grants if the remaining delay budget is greater than the threshold; and

retransmitting the at least one CBG corresponding to one or more PDUs of the first PDU set.

12. The method of item 11, wherein the feedback indicating that the at least one of the plurality of CBGs corresponding to the one or more PDUs of the first PDU set was not successfully received is received in downlink control information (DCI).

13. The method of item 11, wherein the at least one of the plurality of CBGs corresponding to the one or more PDUs of the first PDU set to be retransmitted is negatively acknowledged.

14. The method of item 11, wherein the dynamic PUSCH resource grants are earlier in time than a second PUSCH transmission occasion corresponding to the configured resource grants, further comprising:
retransmitting the at least one CBG corresponding to one or more PDUs of the first PDU set via the dynamic PUSCH resource grants.

15. The method of item 11, wherein one or more CBGs corresponding to one or more PDUs of a second PDU set are transmitted in the second PUSCH transmission occasion corresponding to the configured resource grants.

16. The method of item 15, further comprising:
sending an indication for cancelling the dynamic PUSCH resource grants if every CBG corresponding to the one or more PDUs of the second PDU set is transmitted in the second PUSCH transmission occasion corresponding to the configured resource grants.

17. The method of item 11, wherein at least one CBG corresponding to one or more PDUs of the second set is transmitted in the dynamic PUSCH resource grants allocated for retransmission of the at least one CBG corresponding to one or more PDUs of the first PDU set.

18. The method of item 11, further comprising:
sending an indication that the second PUSCH transmission occasion corresponding to the configured resource grants includes a retransmission of the at least one CBG corresponding to one or more PDUs of the first PDU set.

19. The method of item 18, wherein the indication is a hybrid automatic repeat request (HARQ) process ID.

20. The method of item 19, wherein the configuration information further comprises threshold values related to one or more HARQ transmissions.

**Claims**

1. A wireless transmit/receive unit (WTRU) comprising a processor configured to:

receive configuration information;
transmit a plurality of codeblock groups (CBGs) corresponding to one or more protocol data units (PDUs) of a first PDU set using a first physical uplink shared channel (PUSCH) transmission occasion corresponding to configured resource grants;

receive feedback indicating that at least one of the plurality of CBGs corresponding to the one or more PDUs of the first PDU set was not successfully received;

determine that dynamic PUSCH resource grants are later in time than a second PUSCH transmission occasion corresponding to the configured resource grants; and

determine whether to retransmit the at least one of the plurality of CBGs corresponding to the one or more PDUs of the first PDU set.

2. The WTRU of claim 1, wherein the configuration information comprises a delay budget value, and an indication of the configured resource grants for one or more PUSCH resources.

3. The WTRU of claim 1 or 2, wherein the feedback indicates the dynamic PUSCH resource grants for retransmission of the at least one of the plurality of CBGs.

4. The WTRU of any of claims 1 to 3, wherein the determination of whether to retransmit the at least one of the plurality of CBGs corresponding to the one or more PDUs of the first PDU set uses the dynamic PUSCH resource grants based on an amount of time remaining in a delay budget for the first PDU set.

5. The WTRU of any of claims 1 to 4, wherein the determination of whether to retransmit the at least one of the plurality of CBGs corresponding to the one or more PDUs of the first PDU set uses the second PUSCH transmission occasion corresponding to the configured resource grants based on an amount of time remaining in a delay budget for the first PDU set.

6. The WTRU of any of claims 1 to 5, wherein the processor is further configured to retransmit the at least one of the plurality of CBGs corresponding to one or more PDUs of the first PDU set.

7. The WTRU of any of claims 1 to 6, wherein the feedback indicating that the at least one of the plurality of CBGs corresponding to the one or more PDUs of the first PDU set was not successfully received is received in downlink control information (DCI).

8. The WTRU of any of claims 1 to 7, wherein the at least one of the plurality of CBGs corresponding to the one or more PDUs of the first PDU set to be retransmitted is negatively acknowledged.

9. The WTRU of any of claims 1 to 8, wherein the dynamic PUSCH resource grants are earlier in time than the second PUSCH transmission occasion corresponding to the configured resource grants, the processor is further configured to retransmit the at least one of the plurality of CBGs corresponding to one or more PDUs of the first PDU set via the dynamic PUSCH resource grants.

10. The WTRU of any of claims 1 to 9, wherein one or more CBGs corresponding to one or more PDUs of a second PDU set are transmitted in the second PUSCH transmission occasion corresponding to the configured resource grants.

11. The WTRU of any of claims 1 to 10, wherein the processor is further configured to send an indication for cancelling the dynamic PUSCH resource grants if every CBG corresponding to the one or more PDUs of the second PDU set is transmitted in the second PUSCH transmission occasion corresponding to the configured resource grants.

12. The WTRU of any of claims 1 to 11, wherein at least one CBG corresponding to one or more PDUs of a second PDU set is transmitted in the dynamic PUSCH resource grants allocated for retransmission of the at least one of the plurality of CBGs corresponding to one or more PDUs of the first PDU set.

13. The WTRU of any of claims 1 to 12, wherein the at least one of the plurality of CBGs is transmitted using the second PUSCH transmission occasion corresponding to the configured resource grants if remaining delay budget is less than a threshold, and the at least one of the plurality of CBGs is transmitted using the second PUSCH transmission occasion corresponding to the configured resource grants if the remaining delay budget is greater than the threshold.

14. The WTRU of any of claims 1 to 13, wherein the processor is further configured to send an indication that the second PUSCH transmission occasion corresponding to the configured resource grants includes a retransmission of the at least one of the plurality of CBGs corresponding to one or more PDUs of the first PDU set, wherein the indication is a hybrid automatic repeat request (HARQ) process ID.

15. The WTRU of any of claims 1 to 14, wherein the configuration information further comprises threshold values related to one or more HARQ transmissions.

**FIG. 1A**

116

102a

116

102b

116

104
RAN

114a

108
PSTN

106
Core Network

112
Other
Networks

116

102c

116

102d

110
Internet

114b

EP 4 718 762 A1

FIG. 1B

**FIG. 1C**

EP 4 718 762 A1

**FIG. 1D**

FIG. 2A

FIG. 2B

FIG. 2C

EP 4 718 762 A1

300

Receiving configuration information — 302

Transmitting CBGs corresponding to a first PDU set using a first transmission occasion — 304

Receiving feedback indicating that at least one CBG corresponding to the first PDU set was not successfully received

306

Determining whether the dynamic grant PUSCH resources are later in time than a second PUSCH transmission occasion? — 308

No → Retransmitting via the dynamic grant PUSCH resources

310

Yes

Determining where to retransmit the at least one CBG corresponding to the first PDU? — 312

314
Remaining delay budget < threshold

316
Remaining delay budget > threshold

Retransmit the at least one CBG corresponding to the first PDU set using the second PUSCH transmission occasion — 318

Retransmit the at least one CBG corresponding to the first PDU set using the second PUSCH transmission occasion

322

Send an indication for cancelling the dynamic grant PUSCH resources — 320

**FIG. 3**

Europäisches
Patentamt

European
Patent Office

Office européen
des brevets

# EUROPEAN SEARCH REPORT

Application Number

EP 26 15 6795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/047447 A1 (QUALCOMM INC [US]) 3 March 2022 (2022-03-03) | 1,3,6-8 | INV. H04L1/1822 |
| Y | * figure 11 * | 2,9,10, | H04L1/1829 |
| | * paragraph [0123] - paragraph [0148] * | 12,14,15 | H04L1/1867 |
| A | | 4,5,11, 13 | |
| | ----- | | |
| Y | WO 2021/244748 A1 (NOKIA TECHNOLOGIES OY [FI]) 9 December 2021 (2021-12-09) * figure 3 * * line 22, page 12 - line 20, page 14 * | 2 | |
| | ----- | | |
| Y | INTEL CORPORATION: "Further considerations on Configured UL grant enhancement", 3GPP DRAFT; R2-1912626 FURTHER CONSIDERATION ON CG ENHANCEMENT FOR NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Chongqing, China; 20191014 - 20191018 4 October 2019 (2019-10-04), XP051804579, Retrieved from the Internet: URL:https://ftp.3gpp.org/tsg_ran/WG2_RL2/T SGR2_107bis/Docs/R2-1912626.zip R2-1912626 Further Consideration on CG enhancement for NR-U.docx [retrieved on 2019-10-04] * Sections 2.1-2.2 * | 9,15 | |
| | ----- | | TECHNICAL FIELDS SEARCHED (IPC) H04L |
| Y | US 2022/167391 A1 (BABAEI ALIREZA [US] ET AL) 26 May 2022 (2022-05-26) * figures 19, 27, 28 * * paragraph [0443] - paragraph [0448] * * paragraph [0458] - paragraph [0460] * * paragraph [0488] - paragraph [0495] * | 10,12,14 | |
| | ----- | | |

The present search report has been drawn up for all claims

| Place of search | Date of completion of the search | Examiner |
|---|---|---|
| The Hague | 18 February 2026 | Plata Chaves, Jorge |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 6795

18-02-2026

| Patent document cited in search report | Publication date | Patent family member(s) | Publication date |
|---|---|---|---|
| WO 2022047447 A1 | 03-03-2022 | CN 115956347 A | 11-04-2023 |
| | | EP 4205480 A1 | 05-07-2023 |
| | | KR 20230058390 A | 03-05-2023 |
| | | US 2022070915 A1 | 03-03-2022 |
| | | WO 2022047447 A1 | 03-03-2022 |
| WO 2021244748 A1 | 09-12-2021 | CN 115699978 A | 03-02-2023 |
| | | EP 4162758 A1 | 12-04-2023 |
| | | US 2023239703 A1 | 27-07-2023 |
| | | WO 2021244748 A1 | 09-12-2021 |
| US 2022167391 A1 | 26-05-2022 | US 2020220693 A1 | 09-07-2020 |
| | | US 2022167391 A1 | 26-05-2022 |

**REFERENCES CITED IN THE DESCRIPTION**

**Patent documents cited in the description**

- US 63410916
- US 63526579